# FASCICULE DE BREVET EUROPEEN

(11) **EP 4 082 836 B1**
(45) Date de publication et mention de la délivrance du brevet: **21.08.2024**
(21) Numéro de dépôt: 22164488.3
(22) Date de dépôt: 25.03.2022
(51) Int. Cl.: B60R 5/04, B60R 19/18

(54) **ENSEMBLE DE RANGEMENT INTÉGRÉ À UN COFFRE DE VÉHICULE AUTOMOBILE**
VERSTAUUNGSEINHEIT, DIE IN DEN KOFFERRAUM EINES KRAFTFAHRZEUGS INTEGRIERT IST
STORAGE ASSEMBLY BUILT INTO A LUGGAGE COMPARTMENT OF A MOTOR VEHICLE

(30) Priorité: 28.04.2021 FR 2104407
(43) Date de publication de la demande: 02.11.2022
(73) Titulaire: Renault s.a.s, 92100 Boulogne Billancourt (FR)
(72) Inventeur: CARRIE, Julien, 78280 GUYANCOURT (FR); DE ALMEIDA, Luis Filipe, 78280 GUYANCOURT (FR)
(74) Mandataire: Renault Group

(56) Documents cités:
- EP-A1- 3 159 247
- EP-A1- 3 747 745
- EP-A2- 1 612 127
- WO-A1-2018/211219
- DE-A1- 102013 007 346
- DE-A1- 102013 007 588
- DE-A1- 102015 012 528
- FR-A1- 3 037 917
- US-A1- 2007 046 056

## Description

L'invention concerne un ensemble de rangement installé dans un coffre d'un véhicule automobile, en particulier d'un véhicule automobile électrique ou hybride pour le rangement des câbles de charge.

Dans un véhicule électrique, la batterie doit être rechargée via des câbles que l'on branche sur une borne de recharge, une prise électrique ou autre moyen de recharge. Ces câbles ne sont pas utilisés lorsque le véhicule n'est pas en charge mais ils doivent rester à disposition. Ils peuvent être stockés à même le coffre ou par exemple mis dans une housse mobile déposée dans le coffre. Les documents US 2007/046056 A1, FR 3 037 917A1 et EP 3 159 247 A1 décrivent des véhicules automobiles connus comprenant des coffres de rangement pourvus de bacs intégrés de différentes façons.

L'invention a pour but général de proposer un moyen de rangement sans pénaliser le volume de chargement du coffre de rangement d'un véhicule. En particulier, l'invention vise à permettre de ranger des câbles de charge proprement dans un véhicule électrique ou hybride quand celui-ci n'est pas en charge de sa batterie, sans pénaliser le volume de chargement du coffre.

A cet effet, l'invention propose un véhicule automobile comprenant un coffre de rangement et un ensemble de rangement intégré au plancher dudit coffre de rangement, véhicule comportant les caractéristiques de la revendication 1.

De préférence selon l'invention, ledit bac comprend une paroi verticale fermée sur elle-même et ledit ensemble comprend des pièces constitutives du plancher du coffre s'agençant autour de ladite paroi verticale du bac.

De préférence selon l'invention, ledit rebord supérieur dudit bac comporte une face supérieure, et il comporte un ensemble de nervures de rigidification en sa face supérieure et des deuxièmes moyens de fixation situés entre certaines desdites nervures permettant de fixer ledit bac auxdites pièces constitutives du plancher de coffre.

Avantageusement selon l'invention, ladite paroi verticale du bac a une forme ondulée, notamment en sa portion de paroi se trouvant la plus proche de la traverse de bouclier quand ledit ensemble est installé dans un coffre de véhicule.

En particulier selon l'invention, ledit rebord supérieur dudit bac comprend une face inférieure, et ledit ensemble de rangement comprend un joint d'étanchéité apte à être positionné sous la face inférieure dudit rebord supérieur.

Plus particulièrement selon l'invention, le rangement que comprend ledit ensemble de rangement s'étend sous ledit plancher du coffre.

En particulier, l'invention concerne un véhicule automobile électrique ou hybride, et le bac que comprend ledit ensemble de rangement contient au moins un câble de charge de la batterie du véhicule lorsque ledit véhicule n'est pas en charge.

D'autres particularités et avantages de l'invention ressortiront à la lecture de la description faite ci-après d'un mode de réalisation particulier de l'invention, donné à titre indicatif mais non limitatif, en référence aux dessins annexés.
[Fig. 1] illustre, selon une vue en éclaté, un ensemble de rangement de coffre d'un véhicule automobile conforme à l'invention.
[Fig. 2] représente, selon une vue latérale et en perspective, un bac de rangement d'un ensemble de rangement de coffre d'un véhicule automobile conforme à l'invention tel que celui illustré à la figure 1.
[Fig. 3] illustre, selon une vue en perspective et de dessus, un ensemble de rangement de coffre tel qu'illustré aux figures précédentes, en place au niveau du coffre arrière d'un véhicule automobile.
[Fig. 4] illustre, selon une vue en perspective et de dessous, un ensemble de rangement de coffre, en place au niveau du coffre d'un véhicule automobile tel qu'illustré aux figures précédentes, sans carénages de sous-caisse du véhicule.
[Fig. 5] illustre, selon une vue en perspective et de dessous, 'un ensemble de rangement de coffre, en place au niveau du coffre d'un véhicule automobile, tel qu'illustré aux figures précédentes, en présence des carénages de sous-caisse du véhicule.
[Fig. 6] illustre, selon une coupe longitudinale et en perspective, un ensemble de rangement de coffre, en place au niveau du coffre d'un véhicule automobile tel qu'illustré aux figures précédentes, en présence des carénages de sous-caisse du véhicule.

Les orientations exprimées dans la description des figures sont données en référence à un repère orthonormé classique XYZ du véhicule dans lequel X représente la direction longitudinale avant-arrière du véhicule, orientée vers l'arrière, Y la direction transversale du véhicule, orientée vers la droite, et Z la direction verticale orientée vers le haut du véhicule, ces directions étant utilisées aussi pour décrire le bac seul ou ledit ensemble de rangement de coffre comprenant le bac tels qu'une fois installés dans le coffre du véhicule.

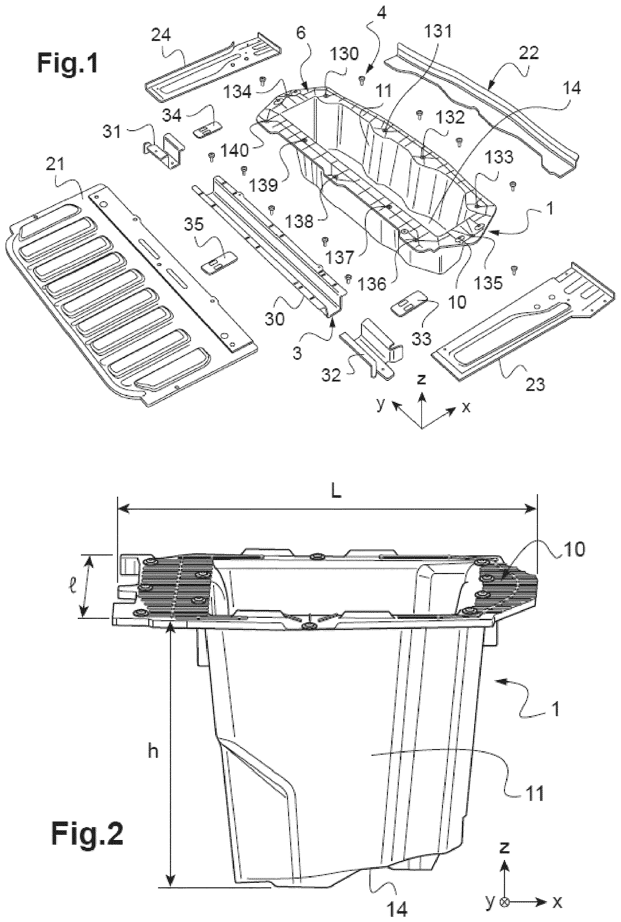

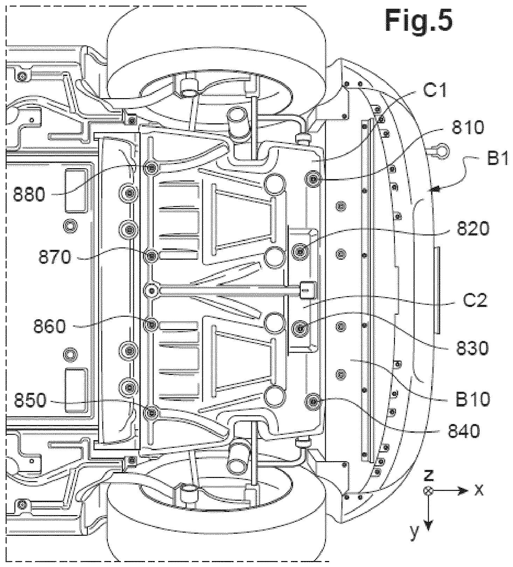

Les figures 1 à 6 sont commentées ensemble.

L'ensemble de rangement conformément à l'invention, s'intégrant à un coffre de véhicule, comprend un bac de rangement 1.

Le bac 1 comprend une paroi verticale11 fermée sur elle-même et un fond 14, délimitant ensemble l'intérieur du bac. Le bac comprend donc une ouverture en sa partie supérieure permettant d'y accéder pour ranger et stocker des objets, notamment des câbles électriques tels que ceux utilisés pour la charge de batterie.

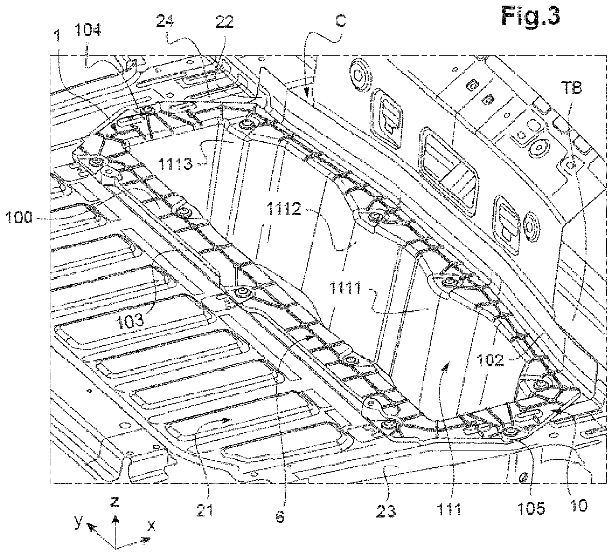

Les parties transversales 111, 112 s'étendant selon la direction Y de ladite paroi verticale 11, partie avant 112 et partie arrière 111, ont une forme ondulée de sorte que des portions de paroi 1111, 1112, 1113 (voir figure 3) sont plus avancées vers l'intérieur du bac que d'autres portions. Cette configuration, notamment celle de la partie de paroi arriérai 11, à proximité du bouclier arrière selon l'exemple, évite les contacts avec la traverse de bouclier arrière TB du véhicule en cas de petits chocs à l'arrière du véhicule, et permet ainsi de protéger le bac. En outre cette configuration permet de créer des zones de rangement, ayant une forme intérieure sensiblement circulaire à ovale afin de faciliter le rangement des câbles électriques, par exemple des câbles enroulés sur eux-mêmes de manière plus ou moins lâche.

Ledit bac 1 comprend un rebord supérieur 10 s'étendant suivant le pourtour de la paroi verticale 11 et sensiblement dans le plan horizontal XY. Ledit rebord selon l'exemple se termine par un petit retour orienté sensiblement dans le plan vertical YZ. Ledit rebord 10 comprend une face supérieure 100, et une face inférieure 101 opposée à ladite face supérieure. Ledit rebord 10 comprend en sa face supérieure 100, une pluralité de nervures de rigidification 6, croisées, formant un quadrillage plus ou moins complexe, et un ensemble de trous de fixation, onze selon l'exemple référencés 130 à 140, qui sont répartis sur ledit rebord, plus particulièrement entre les nervures. Selon l'exemple neuf trous de fixations, référencés 130 à 133 et 136 à 140, sont répartis sur les portions transversales avant 103 et arrière 102 dudit rebord. En outre un trou de fixation 134, 135 est présent sur chaque portion longitudinale dudit rebord 104, 105, s'étendant longitudinalement selon la direction X, c'est-à-dire sur chaque portion latérale droite 104 et gauche 105. Chaque trou de fixation est traversant selon l'exemple. Par ailleurs un ensemble de onze vis 4 constitue un ensemble de moyens de fixation associés audit ensemble de trous de fixation pour fixer ledit bac à un jeu de pièces décrit ci-après.

L'ensemble de rangement de coffre comprend un jeu de pièces entourant le bac de rangement 1. Ces pièces se composent de plaques longitudinales 23, 24 (c'est-à-dire latérales droite 24 et gauche 23), et transversales avant 21 et arrière 22, ayant des formes adaptées pour entourer le bac en épousant les contours de la surface externe du bac, et sensiblement sous ledit rebord supérieur 10, ces plaques formant des éléments constitutifs du plancher du coffre d'un véhicule automobile.

Ledit jeu de pièces comprend en outre selon l'exemple une traverse 3, constituée d'un élément transversal principal 30 et d'éléments complémentaires référencés 31 à 35, se fixant avec la plaque avant 21,et auxquelles se fixe le bac 1. Ladite traverse 3 est un élément de structure du véhicule.

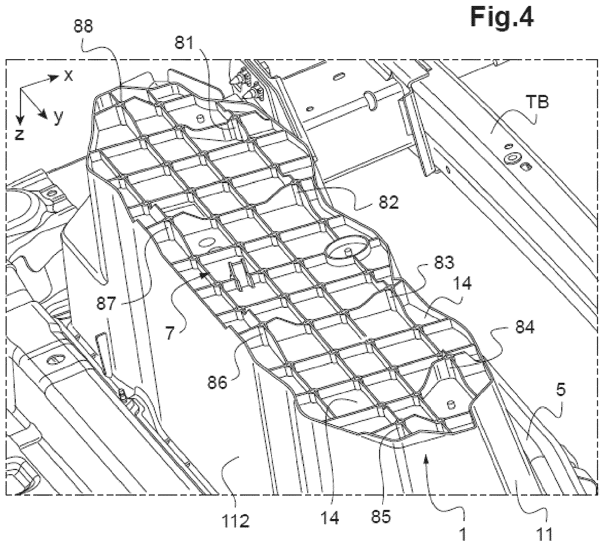

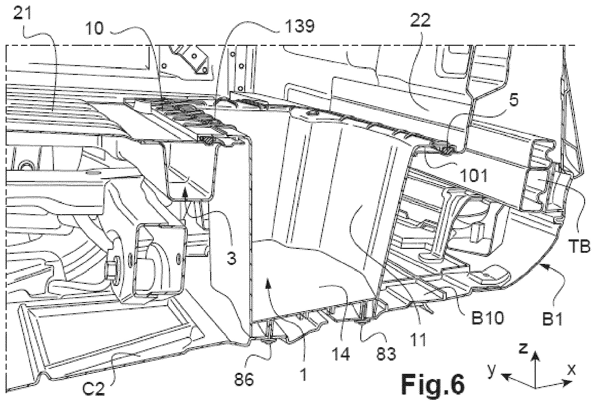

Ledit rebord supérieur 10 du bac 1 est muni en sa surface inférieure 101 d'un joint d'étanchéité 5, visible en partie sur les figures 4 et 6, assurant une jonction étanche avec les pièces constitutives du plancher du coffre qui l'entourent.

Comme l'illustre notamment la figure 3, l'ensemble de rangement est installé à l'arrière du coffre arrière C du véhicule automobile. Selon l'exemple, le bac 1 est situé le plus à l'arrière possible tout en maintenant une distance minimale, par rapport à la traverse de bouclier arrière TB, grâce à la pièce arrière 22 constitutive du plancher de coffre.

Tel que l'illustre la figure 2, le bac 1 peut avoir une hauteur « h », selon la direction Z, qui est de l'ordre de 300 mm, une dimension transversale « I » selon la direction Y, de l'ordre de 990mm, et une dimension longitudinale « L » , selon la direction X, de l'ordre de 355 mm. Ces dimensions sont fonction de la taille du coffre et de l'espace que le constructeur souhaite réserver audit bac, et de plus la hauteur est fonction du modèle de véhicule et de sorte que des éléments de sous-caisse puisent y être fixés comme décrit ci-après.

En référence notamment aux figures 4 à 6, le fond 14 du bac 1 comprend un ensemble de nervures de rigidification 7, qui sont fonctionnalisées. Cet ensemble de nervures comprend une pluralité de nervures qui se croisent. Cet ensemble de nervures intègre au niveau de certaines intersections, des fonctions de fixation. Ces fixations se composent, selon l'exemple, d'une pluralité de fûts de fixation, au nombre de huit selon l'exemple, 81, 82, 83, 84, 85, 86, 87, 88, surmoulés à l'intersection de nervures. Selon l'exemple ces fûts de fixation sont destinés notamment à fixer, à l'aide de moyens de fixation complémentaires constitués selon l'exemple de vis 810, 820, 830, 840, 850, 860, 870, 880, des carénages C1, C2 de sous-caisse du véhicule et une partie du parechoc arrière, en l'occurrence la lame B10 de la peau de bouclier B1. Ces fixations selon l'exemple sont réparties sur le pourtour du fond du bac.

D'autres éléments fonctionnels peuvent être prévus au niveau des nervures du fond de bac, par exemple des moyens de fixation tels que des fûts de fixation pour venir y fixer, notamment par vissage, d'autres interfaces ou accessoires si nécessaire, tels que par exemple et non limitativement des tuyaux, des câblages, un kit de gonflage, un cric.

Un tapis de coffre vient recouvrir le bac, afin de fermer son ouverture lors de son non usage.

Le bac 1 est fabriqué par exemple par moulage d'une matière plastique. Les pièces constitutives du plancher de coffre qui entourent le bac peuvent être des pièces en métal, ou autre matière appropriée.

L'invention a atteint ses objectifs en fournissant un ensemble de rangement s'intégrant au plancher du coffre d'un véhicule, sans pénaliser le volume de chargement du coffre, permettant notamment de ranger des câbles de charge pour charger la batterie d'un véhicule, en particulier électrique ou hybride. Le bac, au delà de faire le stockage des câbles de charge, permet également la fixation de carénages de sous-caisse ainsi que d'une partie du parechoc arrière, voire d'autres interfaces ou accessoires si nécessaire.

Cet ensemble de rangement permet de gagner de la masse, du fait d'un moindre nombre de pièces utilisées notamment pour la fixation des éléments de sous-caisse, et donc aussi du temps de main-d'oeuvre.

## Revendications

1. Véhicule automobile comprenant un coffre de rangement ( C ) et un ensemble de rangement intégré au plancher dudit coffre de rangement, ledit ensemble de rangement comprenant au moins un bac de rangement (1) comportant :
- une partie supérieure qui comporte un rebord supérieur(10) entourant l'ouverture d'accès à l'intérieur du bac, et qui est apte à être intégrée au niveau du plancher du coffre,
**caractérisé en ce qu'**il comprend également un fond (14) avec une face externe munie d'une pluralité de nervures de rigidification (7) qui intègrent des premiers moyens de fixation (81, 82, 83, 84, 85, 86, 87, 88) fixant des carénages (C1, C2) de la sous-caisse, une lame (B10) de la peau du bouclier (B10) et des accessoires du véhicule, lesdites nervures de rigidification dudit fond se croisent et lesdits moyens de fixation sont des fûts de fixation surmoulés respectivement à des intersections de certaines desdites nervures.

2. Véhicule automobile selon l'une des revendication 1, **caractérisé en ce que** ledit bac (1) comprend une paroi verticale fermée sur elle-même (11) et ledit ensemble comprend des pièces constitutives du plancher du coffre (21, 22, 23, 24, 3) s'agençant autour de ladite paroi verticale du bac.

3. Véhicule automobile selon la revendication 2, **caractérisé en ce que** ledit rebord supérieur (10) dudit bac comporte une face supérieure(100), et comporte un ensemble de nervures de rigidification (6) en ladite face supérieure, et des deuxièmes moyens de fixation (130, 131, 132, 133, 134, 135, 136, 137, 138, 139, 140) situés entre certaines desdites nervures, permettant de fixer ledit bac auxdites pièces constitutives du plancher de coffre.

4. Véhicule automobile selon l'une des revendications 1 à 3, **caractérisé en ce que** ladite paroi verticale (11) du bac a une forme ondulée, notamment en sa portion de paroi (111) se trouvant la plus proche de la traverse de bouclier quand ledit ensemble est installé dans un coffre de véhicule .

5. Véhicule automobile selon l'une des revendications 1 à 4, **caractérisé en ce que** ledit rebord supérieur (10) dudit bac comprend une face inférieure (101), et ledit ensemble de rangement comprend un joint d'étanchéité (5) apte à être positionné sous la face inférieure dudit rebord supérieur.

6. Véhicule automobile selon l'une des revendications 1 à 5, **caractérisé en ce que** le bac de rangement (1) que comprend ledit ensemble de rangement s'étend sous ledit plancher du coffre.

7. Véhicule automobile selon l'une des revendications 1 à 6, **caractérisé en ce que** ledit véhicule est électrique ou hybride, et que le bac que comprend ledit ensemble de rangement est apte à contenir au moins un câble de charge de la batterie. 1

## Patentansprüche

1. Kraftfahrzeug, umfassend einen Kofferraum (C) und eine in den Boden des Kofferraums integrierte Aufbewahrungseinheit, wobei die Aufbewahrungseinheit mindestens ein Aufbewahrungswanne (1) umfasst, mit:
- einem oberen Teil, der einen oberen Rand (10) aufweist, der die Zugangsöffnung zum Fachinneren umgibt und dazu geeignet ist, in die Ebene des Kofferraums integriert zu sein,
**dadurch gekennzeichnet, dass** es ferner einen Boden (14) mit einer Außenseite umfasst, die mit einer Vielzahl von Versteifungsrippen (7) versehen ist, die erste Befestigungsmittel (81, 82, 83, 84, 85, 86, 87, 88) enthalten, die Verkleidungen (C1, C2) des Unterkasten, eine Lamelle (B10) der Stoßfängerverkleidung (B10) und des Fahrzeugzubehör befestigen, wobei sich die Versteifungsrippen des Bodens kreuzen und es sich bei den Befestigungsmitteln um Befestigungshülsen handelt, die jeweils an den Schnittpunkten einiger der Rippen angeformt sind.

2. Kraftfahrzeug nach einem der Ansprüche 1, **dadurch gekennzeichnet, dass** das Fach (1) eine in sich geschlossene vertikale Wand (11) umfasst und die Einheit Bauteile (21, 22, 23, 24, 3) umfasst, die den Kofferraumboden bilden und um die vertikale Wand des Fachs herum angeordnet sind.

3. Kraftfahrzeug nach Anspruch 2, **dadurch gekennzeichnet, dass** der obere Rand (10) des Fachs eine Oberseite (100) aufweist und eine Einheit von Versteifungsrippen (6) an der Oberseite sowie zweite Befestigungsmittel (130, 131, 132, 133, 134, 135, 136, 137, 138, 139, 140) aufweist, die sich zwischen einigen der Rippen befinden und es ermöglichen, das Fach an den Bauteilen zu befestigen, die den Kofferraumboden bilden.

4. Kraftfahrzeug nach einem der Ansprüche 1 bis 3, **dadurch gekennzeichnet, dass** die vertikale Wand (11) des Fachs eine Wellenform aufweist, insbesondere an ihrem Wandabschnitt (111), der sich am nächsten zum Stoßfängerträger befindet, wenn die Einheit im Kofferraum eines Fahrzeugs installiert ist.

5. Kraftfahrzeug nach einem der Ansprüche 1 bis 4, **dadurch gekennzeichnet, dass** der obere Rand (10) des Fachs eine Unterseite (101) umfasst und die Aufbewahrungseinheit eine Dichtung (5) umfasst, die unter der Unterseite des oberen Rands positioniert sein kann.

6. Kraftfahrzeug nach einem der Ansprüche 1 bis 5, **dadurch gekennzeichnet, dass** sich das Aufbewahrungsfach (1), das in der Aufbewahrungseinheit enthalten ist, unter dem Kofferraumboden erstreckt.

7. Kraftfahrzeug nach einem der Ansprüche 1 bis 6, **dadurch gekennzeichnet, dass** es sich bei dem Fahrzeug um ein Elektro- oder Hybridfahrzeug handelt und dass das Fach, das in der Aufbewahrungseinheit enthalten ist, mindestens ein Batterieladekabel aufnehmen kann.

## Claims

1. Motor vehicle comprising a storage boot (C) and a storage assembly integrated in the floor of said storage boot, said storage assembly comprising at least one storage bin (1) having:
- an upper part that has an upper lip (10) surrounding the opening providing access to the inside of the bin, and that is able to be integrated at the floor of the boot,
**characterized in that** it also comprises a bottom (14) with an external face provided with a plurality of stiffening ribs (7) that integrate first fastening means (81, 82, 83, 84, 85, 86, 87, 88) fastening fairings (C1, C2) of the underbody, a strip (B10) of the skin of the protective moulding (B10) and accessories of the vehicle, said stiffening ribs of said bottom cross and said fastening means are fastening shafts overmoulded respectively on intersections of some of said ribs.

2. Motor vehicle according to Claim 1, **characterized in that** said bin (1) comprises a vertical wall closed on itself (11) and said assembly comprises constituent pieces of the floor of the boot (21, 22, 23, 24, 3) that are arranged around said vertical wall of the bin.

3. Motor vehicle according to Claim 2, **characterized in that** said upper lip (10) of said bin has an upper face (100), and has an assembly of stiffening ribs (6) in said upper face, and second fastening means (130, 131, 132, 133, 134, 135, 136, 137, 138, 139, 140) situated between some of said ribs, making it possible to fasten said bin to said constituent pieces of the boot floor.

4. Motor vehicle according to one of Claims 1 to 3, **characterized in that** said vertical wall (11) of the bin has a wavy shape, in particular in its wall portion (111) closest to the protective moulding crossmember when said assembly is installed in a vehicle boot.

5. Motor vehicle according to one of Claims 1 to 4, **characterized in that** said upper lip (10) of said bin has a lower face (101), and said storage assembly comprises a seal (5) that is able to be positioned beneath the lower face of said upper lip.

6. Motor vehicle according to one of Claims 1 to 5, **characterized in that** the storage bin (1) that said storage assembly comprises extends beneath said floor of the boot.

7. Motor vehicle according to one of Claims 1 to 6, **characterized in that** said vehicle is electric or hybrid, and **in that** the bin that said storage assembly comprises is able to contain at least one charging cable for the battery.
